# FASCICULE DE BREVET EUROPEEN

(11) **EP 1 192 796 B1**
(45) Date de publication et mention de la délivrance du brevet: **12.10.2005**
(21) Numéro de dépôt: 00940410.4
(22) Date de dépôt: 28.06.2000
(51) Int. Cl.: H04M 17/02

(54) **GESTION DE TELEPHONES PUBLICS**
VERWALTUNG VON MÜNZFERNSPRECHERN
PAYPHONE MANAGEMENT SYSTEM

(30) Priorité: 09.07.1999 FR 9908922
(43) Date de publication de la demande: 03.04.2002
(73) Titulaire: SPT PUBLICOM, 92120 Montrouge (FR)
(72) Inventeur: GRUNENWALD, Rodolphe, F-94340 Joinville le Pont (FR)
(74) Mandataire: Weihs, Bruno Konrad
(86) Numéro de dépôt international: PCT/EP2000/006001
(87) Numéro de publication internationale: WO 2001/005137

(56) Documents cités:
- EP-A- 0 468 913
- MEADE P: "CYBERBOOTHS: THE NEW PAYPHONE?" AMERICA'S NETWORK,US,ADVANSTAR COMMUNICATIONS, CLEVELAND, OH, vol. 101, no. 11, 1 juin 1997 (1997-06-01), pages 44,46-46, XP000856676 ISSN: 0040-263X
- WILLIAMS L D L: "PAYPHONE REMOTE MANAGEMENT SYSTEMS" BRITISH TELECOMMUNICATIONS ENGINEERING,GB,BRITISH TELECOMMUNICATIONS ENGINEERING. LONDON, vol. 11, no. PART 02, 1 juillet 1992 (1992-07-01), pages 85-89, XP000297298 ISSN: 0262-401X

## Description

La présente invention concerne un système de téléphonie comportant une pluralité de téléphones publics reliés à un ensemble de serveurs d'informations à travers un réseau de communication.

L'invention trouve une application particulièrement avantageuse à tous les systèmes de téléphonie comportant des téléphones publics, qu'ils soient à opérateur public ou privé.

Le document Meade P : « Cyberbooths : The new Payphone? America's network, US, Advanstar Communications, Cleveland; OH, vom. 101, noll. 11, 1 juin 1997, pages 44, 46, XP000856676 ISSN : 0040-263X» décrit un type de kiosque dans lequel des téléphones avec prise modem et/ou des ordinateurs personnels pour accéder à Internet sont mis à disposition du public contre paiement par carte.

La demande de brevet EP 0 468 913 à Telefonica de Espana, S.A., décrit un système d'opération modulaire pour téléphones publics dans lequel une unité de centralisation de messages communique avec des téléphones modulaires et d'autres entités en échangeant des messages d'opération spécifiques.

Le document « Payphone Remote Management systems, Williams L D L; British Telecommunications Engineering, London, vol. 11; no. Part 02, 1 juillet 1992, pages 85 - 89, XP000297298 ISSN : 0262-401X» décrit des systèmes d'administration à distance de téléphone à péage, y compris des nouvelles fonctionnalités introduites dans les années 1990.

On connaît actuellement des systèmes de téléphonie dans lesquels l'ensemble des téléphones publics, appelés aussi publiphones, est connecté à un réseau de communication constitué par le réseau téléphonique commuté (RTC) avec lequel ils communiquent au moyen d'un modem et selon un protocole spécifique, dit propriétaire. Est également connecté par modem au réseau téléphonique commuté un serveur de supervision, souvent appelé PMS pour le terme anglo-saxon « Payphone Management System », équipé du même protocole propriétaire que les publiphones. Ce serveur de supervision a pour fonction d'échanger avec le parc de publiphones des informations relatives au fonctionnement du système de téléphonie.

A titre d'exemple, un publiphone peut appeler le serveur de supervision à travers le réseau téléphonique commuté à une heure donnée ou sur alarme, afin d'envoyer des informations concernant l'usage qui est fait de ce publiphone, telles que le nombre de communications passées, le nombre d'unités correspondant, etc. Toutes ces données sont ensuite consolidées par le serveur de supervision pour établir des statistiques diverses. Inversement, le serveur de supervision peut fournir des informations aux publiphones, comme de nouvelles tables de tarifs ou de paramètres lorsque celles-ci sont modifiées.

Cependant, ces systèmes connus de téléphonie présentent un certain nombre d'inconvénients. En particulier, l'architecture utilisée est centralisée autour d'un serveur de supervision qui est un ordinateur du type PC dont la puissance de l'unité centrale est souvent insuffisante pour gérer un réseau important de publiphones, d'autant plus qu'il doit également gérer directement des cartes modems au travers de son bus. En outre, l'utilisation d'un protocole propriétaire est, d'une part, lourde puisqu'il faut souvent le changer à chaque modification du système, et, d'autre part, limitée car il ne permet d'échanger des informations qu'avec des serveurs équipés du même protocole spécifique.

Aussi, le problème technique à résoudre par l'objet de la présente invention est de proposer un système de téléphonie comportant une pluralité de téléphones publics reliés à un ensemble de serveurs d'informations à travers un réseau de communication, qui, d'une part, offrirait une plus grande facilité de supervision, et, d'autre part, présenterait une architecture décentralisée, ouverte et évolutive, permettant un échange d'informations étendu à un grand nombre de serveurs, notamment fournisseurs de services, se détachant du réseau de communication.

La solution au problème technique posé consiste, selon la présente invention, en ce que au moins l'un des serveurs d'informations est connecté à l'Internet, et en ce que chaque téléphone public est équipé de protocoles de communication Internet conformes aux recommandations techniques de l'IETF.

Ainsi, les utilisateurs du système de téléphonie conforme à l'invention peuvent avoir accès à un grand nombre de serveurs d'informations sur le réseau Internet, leur choix ne dépendant que de l'opérateur du système. De plus, l'opérateur peut, à tout moment et de façon très simple, ajouter de nouveaux serveurs à la disposition des utilisateurs, ceci grâce à la souplesse et le caractère évolutif et ouvert conférés au système de téléphonie de l'invention par son rattachement à l'Internet. Il suffit pour cela d'attribuer une adresse Internet à chaque nouveau serveur.

Un autre avantage de l'invention réside dans le fait qu'elle permet un éclatement des moyens de supervision en un serveur de supervision proprement dit, chargé de gérer les échanges d'informations avec les publiphones et effectuer des statistiques, et un serveur de logiciels et/ou fichiers. Naturellement, chacun de ces serveurs aura reçu sa propre adresse Internet. De cette façon, le serveur de supervision se trouve déchargé de toutes les opérations de transfert de logiciels et de fichiers, ce qui le rend plus disponible pour ses autres tâches.

Selon un premier mode de réalisation, le système de téléphonie de l'invention comporte un serveur d'accès distant apte à mettre en communication la pluralité de téléphones publics avec l'ensemble des serveurs d'informations, par routage des informations via des adresses Internet au travers dudit réseau de communication. Dans ce cas, tous les aspects de connexion aux publiphones par modems sont déportés vers le serveur d'accès distant, ce qui allège d'autant le serveur de supervision. A titre d'exemple, ledit réseau de communication est un réseau téléphonique commuté analogique ou numérique.

Selon un deuxième mode de réalisation, ledit réseau de communication est l'Internet, lesdits téléphones publics étant également connectés à l'Internet.

La description qui va suivre en regard du dessin annexé, donné à titre d'exemple non limitatif, fera bien comprendre en quoi consiste l'invention et comment elle peut être réalisée.

La figure 1 est un schéma d'un premier système de téléphonie conforme à l'invention.

La figure 2 est un schéma d'un deuxième système de téléphonie conforme à l'invention.

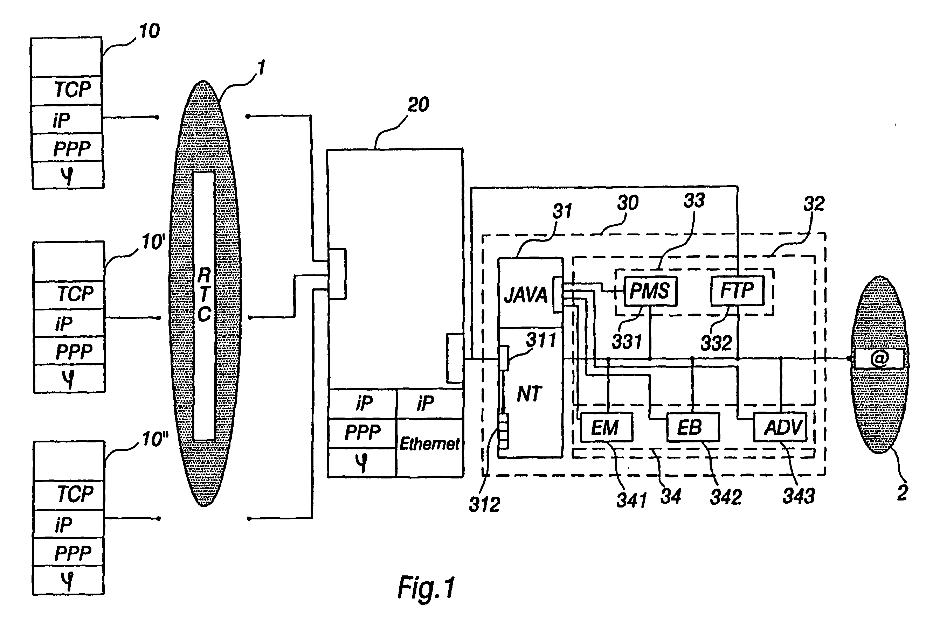

Sur la figure 1 est représenté un système de téléphonie comportant une pluralité de publiphones 10, 10', 10",... reliés à un ensemble 32 de serveurs d'informations à travers un réseau de communication qui, dans l'exemple de réalisation de la figure 1, est un réseau téléphonique commuté RTC 1 analogique ou numérique.

Ainsi qu'on peut le voir sur la figure 1, l'ensemble 32 de serveurs d'informations est connecté à l'Internet 2, tandis que les publiphones 10, 10', 10",... sont équipés de protocoles de communication TCP/IP conformes aux recommandations techniques de l'IETF (« Internet Engineering Task Force »).

Dans le mode de réalisation montré à la figure 1, un serveur 20 d'accès distant est disposé entre le réseau 1 de communication et l'ensemble 32 de serveurs et est chargé de mettre en communication les publiphones 10, 10', 10",... avec les serveurs 331, 332, 341, 342, 343 d'informations par routage des informations via des adresses Internet attribuées auxdits serveurs. La couche physique des publiphones est ici réalisée par des modems analogiques ou numériques (ISDN). De façon pratique, le serveur 20 peut être constitué par un routeur du type 3620-CH fabriqué par la société Cisco.

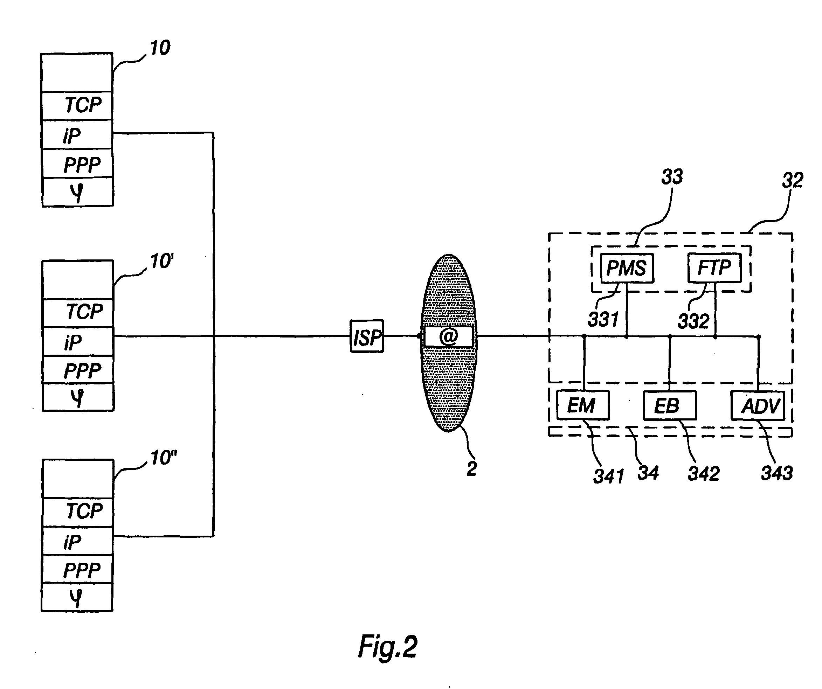

Il faut noter ici que, si dans l'exemple de la figure 1 le réseau de communication représenté est un réseau téléphonique commuté analogique ou numérique, le système de téléphonie de l'invention pourrait tout aussi bien être réalisé, conformément à la figure 2, avec l'Internet comme réseau de communication, les publiphones 10, 10', 10", .... étant également connectés à l'Internet au travers d'un fournisseur de services Internet ISP (« Internet Service Provider »).

On peut observer sur la figure 1 la présence d'une interface 31 de communication placée entre le serveur 20 d'accès distant et l'ensemble 32 des serveurs d'informations. Cette interface 31 est chargée de contrôler, synchroniser et réguler des sessions d'échange d'informations entre les publiphones 10, 10', 10",... et les serveurs 331, 332, 341, 342, 343. Une des fonctions de ladite interface 31 de communication est d'établir des sessions d'échange d'informations fiables et authentifiées qui consiste par exemple à identifier de façon certaine les publiphones lors d'un échange d'informations avec les serveurs, ou encore à encrypter des données afin de sécuriser la communication en cas de besoin.

Une autre fonction de l'interface 31 de communication est de piloter et réguler les échanges d'informations réalisés via des transferts de fichiers standard et conformes aux protocoles Internet. Au cours de ces transferts, l'interface 31 devra notamment détecter les virus pouvant infecter les fichiers.

De façon pratique, l'interface 31 de communication peut être constituée d'un ordinateur de type PC fonctionnant sur Windows NT (marque déposée). Toute requête de connexion à un serveur 331, 332, 341, 342, 343 parvient sur le port 311 d'entrée qui est écouté en permanence par l'interface 31, puis redirigé vers un port 312 de travail. La requête est ensuite analysée par une application logicielle en langage Java (marque déposée) permettant le contrôle et l'établissement d'une session au sens protocole du terme. Une interface standard ("socket") est alors ouverte et la requête est émise vers le serveur de destination, et inversement.

Comme on peut l'observer sur les figures 1 et 2, l'ensemble 32 des serveurs d'informations est constitué en réseau local 30, Ethernet par exemple. Dans le cas de la figure 1, l'interface 31 de communication fait partie du réseau local 30. Cette constitution en réseau local facilite la maintenance et la supervision des serveurs.

Sur la figure 1, on a distingué parmi l'ensemble 32 des serveurs, un premier ensemble 33 de serveurs de gestion des publiphones 10, 10', 10",... et un deuxième ensemble 34 de serveurs de fourniture de services.

Comme cela a déjà été décrit plus haut, l'ensemble 33 des serveurs de gestion a pour fonction essentielle d'échanger avec les publiphones 10, 10', 10",... des informations concernant leur fonctionnement et, plus généralement, celui du système de téléphonie global. Avantageusement, et contrairement aux systèmes actuellement connus, l'ensemble 33 de serveurs de gestion comprend un serveur 331 de supervision (PMS) et un serveur 332 de logiciels et/ou de fichiers (FTP pour « File Transfer Protocol »). Le serveur 331 de supervision est chargé d'organiser les échanges d'informations entre les publiphones 10, 10', 10",... et l'ensemble 33 de gestion, en particulier de contrôler des transferts de fichiers et/ou logiciels, notamment les téléchargements, entre les publiphones et le serveur FTP 332. De plus, le serveur PMS 331 gère les sessions d'initialisation des publiphones et établit des données statistiques à partir des informations reçues des publiphones 10, 10', 10",...

Le serveur FTP 332 est destiné, soit à fournir aux publiphones des fichiers nécessaires à leur fonctionnement, tels que tables de tarifs, paramètres de configuration, concernant le type de numérotation par exemple, listes d'opposition ou de surveillance, fichiers de statut des publiphones, soit à recevoir des publiphones des informations sur leur utilisation, à savoir la remontée de transactions, un rapport journalier comportant en particulier des données relatives au trafic, un rapport d'alarmes qui permet de signaler à l'ensemble 33 de gestion certains incidents qui ont pu se produire sur les publiphones, comme une panne sur le lecteur de cartes ou un combiné arraché, de manière à prévoir l'intervention d'un agent de surveillance.

Il apparaît sur la figure 1 que le serveur FTP 332 n'est pas connecté à l'interface 31. En effet, compte tenu de la spécificité de ce serveur, cette connection n'est pas nécessaire, mais il reste toutefois sous le contrôle du serveur 331 de supervision.

Une session de gestion peut se dérouler de la façon suivante. A un moment prédéterminé ou en cas d'alarme, un publiphone appelle le serveur 20 d'accès distant pour atteindre le serveur PMS 331. Le serveur 20 attribue alors en dynamique au publiphone une adresse Internet provisoire de manière à permettre l'échange d'informations entre le serveur PMS 331 et le publiphone. Le serveur PMS 331 peut alors demander au publiphone son statut actuel et lui demander, par exemple, de se connecter au serveur FTP 332 pour télécharger une nouvelle table de tarifs s'il s'était avéré que la table présente dans le publiphone n'était pas actualisée. A la fin de la communication, le publiphone est remis à l'état de veille.

Il faut remarquer ici que l'interface 31 de communication, le serveur PMS 331 et le serveur FTP 332, au lieu d'être des machines séparées comme sur la figure 1, peuvent être regroupés dans un seul ordinateur de type PC par exemple. Ce sera le cas notamment pour des opérateurs de réseaux de petite dimension.

Le deuxième ensemble 34 de serveurs comprend des serveurs 341, 342 fournissant des services en ligne sur Internet, tels que le courrier électronique (EM) ou le commerce électronique (EB). Ces services peuvent être également le contenu de pages Web dont les hyperliens sont attachés aux touches de fonction des publiphones 10,10',10",...

D'autres services peuvent être des services autogérés sur le réseau local, comme la publicité (ADV), l'horoscope, la météo, des services municipaux, etc..

## Revendications

1. Système de téléphonie comportant une pluralité de téléphones publics (10, 10', 10") reliés à un ensemble (32) de serveurs d'informations à travers un réseau (1) de communication, **caractérisé en ce que** au moins l'un des serveurs d'informations est connecté à l'Internet (2), et en que chaque téléphone public (10, 10', 10") est équipé de protocoles TCP/IP de communication Internet.

2. Système selon la revendication 1, carctérisé en ce qu'il comporte un serveur (20) d'accès distant apte à mettre en communication la pluralité de téléphones publics (10,10',10") avec l'ensemble (32) des serveurs d'informations, par routage des informations via des adresses Internet au travers dudit réseau (1) de communication.

3. Système selon la revendication 2, **caractérisé en ce que** ledit réseau de communication est un réseau téléphonique commuté (1) analogique ou numérique.

4. Système selon la revendication 1, **caractérisé en ce que** ledit réseau de communication est l'Internet, lesdits téléphones publics (10,10',10") étant également connectés à l'Internet.

5. Système selon l'une quelconque des revendications 1 à 3, **caractérisé en ce qu'**une interface (31) de communication entre le serveur (20) d'accès distant et l'ensemble (32) des serveurs d'informations est apte à contrôler, synchroniser et réguler des sessions d'échange d'informations entre les téléphones publics (10,10',10") et les serveurs (331,332,341,342,343) d'informations.

6. Système selon la revendication 5, **caractérisé en ce que** ledit contrôle de sessions d'échange d'informations consiste à établir une session fiable et authentifiée entre un téléphone public (10,10',10") et un serveur (331,332,341,342,343) d'informations et à piloter et réguler l'échange d'informations réalisé via un transfert de fichiers standard et conforme aux protocoles Internet.

7. Système selon l'une des revendications 5 ou 6, **caractérisé en ce que** lesdites sessions d'échange d'informations comprennent des sessions de gestion des téléphones publics entre des serveurs (331,332) de gestion et les téléphones publics (10,10',10").

8. Système selon la revendication 7, **caractérisé en ce que** lesdites sessions de gestion comprennent des sessions d'initialisation des téléphones publics (10,10',10"), de rapport journalier, de rapport d'alarmes, de téléchargement de logiciels et/ou de fichiers, de remontée de transactions.

9. Système selon la revendication 8, **caractérisé en ce que** lesdits fichiers comprennent des tables de tarifs, des paramètres de configuration, des listes d'opposition ou de surveillance, des fichiers de statut des téléphones publics (10,10',1 10").

10. Système selon l'une quelconque des revendications 7 à 9, **caractérisé en ce que** lesdits serveurs de gestion sont constitués d'un serveur (331) de supervision et d'un serveur (332) de logiciels et /ou fichiers.

11. Système selon l'une quelconque des revendications 5 à 10, **caractérisé en ce que** lesdites sessions d'échange d'informations comprennent des sessions de fourniture de services entre des serveurs (341,342,343) de services et les téléphones publics (10,10',10").

12. Système selon l'une quelconque des revendications 1 à 11, **caractérisé en ce que** l'ensemble (32) des serveurs d'informations sont constitués en réseau local (30).

13. Système selon l'une des revendications 11 ou 12, **caractérisé en ce que** lesdits services sont des services fournis en ligne sur l'Internet (2) ou autogérés sur le réseau local (30).

14. Système selon la revendication 13, **caractérisé en ce que** lesdits services fournis en ligne comprennent la messagerie électronique, le commerce électronique.

15. Système selon l'une des revendications 13 ou 14, **caractérisé en ce que** lesdits services fournis en ligne sont constitués par le contenu de pages Web dont les hyperliens sont attachés aux touches de fonctions des téléphones publics (10,10',10").

16. Système selon l'une des revendications 13 à 15, **caractérisé en ce que** lesdits services fournis sur le réseau local (30) comprennent l'horoscope, la météo, des services municipaux ou d'autres services que pourraient demander un client.

## Patentansprüche

1. Telefonsystem mit einer Anzahl von öffentlichen Telefonen (10, 10', 10"), die über ein Kommunikationsnetz (1) mit einer Gesamtheit (32) von Informationsservern verbunden sind, **dadurch gekennzeichnet, dass** wenigstens einer der Informationsserver mit dem Internet (2) verbunden ist und dass jedes öffentliche Telefon (10, 10', 10") mit Internet-Kommunikationsprotokollen TCP/IP ausgerüstet ist.

2. System nach Anspruch 1, **dadurch gekennzeichnet, dass** es einen entfernten Zugangsserver (20) umfasst, der dazu geeignet ist, die Anzahl von öffentlichen Telefonen mit der Gesamtheit (32) der Informationsserver durch Leitwegsteuerung von Informationen über Internetaddressen über das Kommunikationsnetz (1) in Verbindung zu setzen.

3. System nach Anspruch 2, **dadurch gekennzeichnet, dass** das Kommunikationsnetz ein analoges oder digitales Telefonwahlnetz (1) ist.

4. System nach Anspruch 1, **dadurch gekennzeichnet, dass** das Kommunikationsnetz das Internet ist, wobei die öffentlichen Telefone (10, 10', 10") auch mit dem Internet verbunden sind.

5. System nach einem der Ansprüche 1 bis 3, **dadurch gekennzeichnet, dass** eine Kommunikationsschnittstelle (31) zwischen dem entfernten Zugangsserver (20) und der Gesamtheit (32) der Informationsserver dazu geeignet ist, Informationsaustauschverbindungen zwischen den öffentlichen Telefonen (10, 10', 10") und den Informationsservern (331, 332, 341, 342, 343) zu steuern, zu synchronisieren und zu regeln.

6. System nach Anspruch 5, **dadurch gekennzeichnet, dass** die Steuerung der Informationsaustauschverbindungen darin besteht, eine zuverlässige und authentifizierte Verbindung zwischen einem öffentlichen Telefon (10, 10', 10") und einem Informationsserver (331, 332, 341, 342, 343) herzustellen sowie den Informationsaustausch zu steuern und zu regeln, der durch eine standardmäßige und Internetprotokollen entsprechende Dateiübertragung realisiert wird.

7. System nach einem der Ansprüche 5 oder 6, **dadurch gekennzeichnet, dass** die Informationsaustauschverbindungen Steuerungsverbindungen der öffentlichen Telefone zwischen den Steuerungsservern (331, 332) und den öffentlichen Telefonen (10, 10', 10") umfassen.

8. System nach Anspruch 7, **dadurch gekennzeichnet, dass** die Steuerungsverbindungen Initialisierungsverbindungen für die öffentlichen Telefone (10, 10', 10"), Tagesberichte, Alarmberichte, Herunterladen von Software und/oder Dateien und Wiederaufnahme von Transaktionen umfassen.

9. System nach Anspruch 8, **dadurch gekennzeichnet, dass** die Dateien Tariftabellen, Konfigurationsparameter, Gegenbuchungs- oder Überwachungslisten sowie Statuslisten der öffentlichen Telefone (10, 10', 10") enthalten.

10. System nach einem der Ansprüche 7 bis 9, **dadurch gekennzeichnet, dass** die Steuerungsserver aus einem Überwachungsserver (331) und einem Server für Programme und/oder Dateien gebildet sind.

11. System nach einem der Ansprüche 5 bis 10, **dadurch gekennzeichnet, dass** die Informationsaustauschverbindungen Verbindungen für die Erbringung von Diensten zwischen den Diensteservern (341, 342, 343) und den öffentlichen Telefonen (10, 10', 10") umfassen.

12. System nach einem der Ansprüche 1 bis 11, **dadurch gekennzeichnet, dass** die Gesamtheit (32) der Informationsserver als lokales Netzwerk (30) ausgebildet sind.

13. System nach einem der Ansprüche 11 oder 12, **dadurch gekennzeichnet, dass** die Dienste als Online-Dienste über das Internet oder als selbstgesteuerte Dienste über das lokale Netzwerk (30) erbracht werden.

14. System nach Anspruch 13, **dadurch gekennzeichnet, dass** die online erbrachten Dienste elektronische Post und elektronischen Handel umfassen.

15. System nach einem der Ansprüche 13 oder 14, **dadurch gekennzeichnet, dass** die online erbrachten Dienste durch den Inhalt von Web-Seiten gebildet werden, deren Hyperlinks mit Funktionstasten der öffentlichen Telefone (10, 10', 10") verknüpft sind.

16. System nach einem der Ansprüche 13 bis 15, **dadurch gekennzeichnet, dass** die über das lokale Netzwerk (30) erbrachten Dienste das Horoskop, den Wetterbericht, städtische Dienste oder andere Dienste umfassen, die ein Kunde nachfragen könnte.

## Claims

1. Telephone system comprising a plurality of payphones (10, 10', 10'') linked to a set (32) of information servers through a communication network (1), **characterized in that** at least one of the information servers is connected to the Internet (2), and **in that** each payphone (10, 10', 10") is equipped with Internet communication protocols (TCP/IP).

2. System according to Claim 1, **characterized in that** it comprises a remote access server (20) able to place the plurality of payphones (10, 10', 10") in communication with the set (32) of information servers, by routing the information via Internet addresses through the said communication network (1).

3. System according to Claim 2, **characterized in that** the said communication network is an analogue or digital switched telephone network (1).

4. System according to Claim 1, **characterized in that** the said communication network is the Internet, the said payphones (10, 10', 10") also being connected to the Internet.

5. System according to any one of Claims 1 to 3, **characterized in that** an interface (31) for communicating between the remote access server (20) and the set (32) of information servers is able to monitor, synchronize and regulate information exchange sessions between the payphones (10, 10', 10'') and the information servers (331, 332, 341, 342, 343).

6. System according to Claim 5, **characterized in that** the said monitoring of the information exchange sessions consists in establishing a reliable and authenticated session between a payphone (10, 10', 10'') and an information server (331, 332, 341, 342, 343) and in controlling and regulating the information exchange carried out via a standard transfer of files in accordance with the Internet protocols.

7. System according to one of Claims 5 or 6, **characterized in that** the said information exchange sessions comprise sessions of management of the payphones between management servers (331, 332) and the payphones (10, 10', 10") .

8. System according to Claim 7, **characterized in that** the said management sessions comprise sessions of initialization of the payphones (10, 10', 10"), of daily reporting, of alarm reporting, of downloading of software and/or of files, of uploading of transactions.

9. System according to Claim 8, **characterized in that** the said files comprise tables of tariffs, configuration parameters, blacklists or surveillance lists, files of status of the payphones (10, 10', 10'').

10. System according to any one of Claims 7 to 9, **characterized in that** the said management servers consist of a supervising server (331) and of a software and/or file server (332).

11. System according to any one of Claims 5 to 10, **characterized in that** the said information exchange sessions comprise sessions of provision of services between services servers (341, 342, 343) and the payphones (10, 10', 10'').

12. System according to any one of Claims 1 to 11, **characterized in that** the set (32) of information servers are constituted as a local network (30).

13. System according to one of Claims 11 or 12, **characterized in that** the said services are services provided on line on the Internet (2) or automanaged on the local network (30).

14. System according to Claim 13, **characterized in that** the said services provided on line comprise electronic messaging, electronic commerce.

15. System according to one of Claims 13 or 14, **characterized in that** the said services provided on line are constituted by the content of web pages whose hyperlinks are attached to the function keys of the payphones (10, 10', 10") .

16. System according to one of Claims 13 to 15, **characterized in that** the said services provided on the local network (30) comprise horoscopes, the weather, municipal services or other services that a customer might request.
